# DEMANDE DE BREVET EUROPEEN

(11) **EP 0 718 648 A1**
(43) Date de publication de la demande: **26.06.1996**
(21) Numéro de dépôt: 95402825.4
(22) Date de dépôt: 15.12.1995
(51) Int. Cl.: G02B 6/28

(54) **Procédé de fabrication d'un répartiteur optique multifibre et répartiteur optique obtenu selon ce procédé**

(30) Priorité: 21.12.1994 FR 9415406
(71) Demandeur: ALCATEL CABLE, F-92100 Clichy (FR)
(72) Inventeur: Tardy, André, F-91520 Egly (FR); Dumas, Jean-Pierre, F-91360 Villemoisson sur Orge (FR)
(74) Mandataire: Buffiere, Michelle

(57) **Abrégé**

Le répartiteur optique multifibre comporte N fibres périphériques et une fibre centrale couplées optiquement. Le procédé de fabrication selon l'invention d'un tel répartiteur est caractérisé en ce qu'il consiste par étirage d'une préforme primaire composite à réaliser un conducteur multiguide dont les guides sont des fibres élémentaires cylindriques noyées parallèlement dans une gaine de couplage optique et mécanique, définissent les fibres du répartiteur et présentent des caractéristiques opto-géométriques pour leur couplage optique sur une longueur définie de ce conducteur, sectionné en conséquence.

Application : coupleur optique.

## Description

La présente invention porte sur un procédé de fabrication d'un répartiteur optique multifibre et sur le répartiteur optique obtenu selon ce procédé.

On entend par répartiteur multifibre un répartiteur comportant plusieurs fibres optiques monocoeurs ayant chacune un coeur entouré d'une gaine optique cylindrique.

Dans les fibres optiques monocoeurs conventionnelles, le diamètre du coeur est de 7 à 10 microns en général et le diamètre extérieur de la gaine optique de 125 microns. Ces fibres monocoeurs conventionnelles sont de manière habituelle entourées d'au moins une couche de protection, autour de leur gaine optique. Elles sont dites dénudées, en l'absence de toute couche de protection autour de leur gaine optique.

Comparativement, on entend par fibre optique multicoeur une fibre optique comportant plusieurs fibres dites élémentaires ayant également chacune un coeur entouré d'une gaine optique. Dans ces fibres élémentaires, le coeur a aussi un diamètre de l'ordre de 7 à 10 microns mais la gaine optique a un diamètre extérieur réduit, de 25 à 40 microns. Les fibres élémentaires d'une fibre multicoeur sont liées mécaniquement dans une gaine cylindrique, de diamètre de 125 microns, en étant indépendantes optiquement les unes des autres.

Un répartiteur optique multifibre est destiné à assurer un couplage optique entre ses fibres.

L'article intitulé "Monolithic wavelength-flattened 1 x 7 single-mode fused fibrer couplers : theory, fabrication, and analysis" paru dans la revue Applied Optics/vol.30, No.6/ 20 février 1991 décrit un tel répartiteur optique multifibre.

Ce répartiteur connu comporte 7 fibres monocoeurs conventionnelles dénudées, assemblées de manière jointive les unes aux autres dans un tube capillaire et couplées optiquement les unes aux autres localement dans ce tube, l'une des fibres étant centrale et les autres périphériques. Ce couplage optique est obtenu en réalisant un étranglement biconique sur le tube contenant les 7 fibres. L'énergie injectée dans la fibre centrale, par une première de ses extrémités, se propage dans cette seule fibre centrale jusqu'à l'étranglement, se répartit à ce niveau entre les 7 fibres et se propage dans ces 7 fibres depuis l'étranglement.

Cet étranglement est réalisé par chauffage localisé du tube et la fusion résultante des gaines optiques intérieures et par étirage de l'ensemble.

Il conduit à un couplage optique entre la fibre centrale et chacune des fibres périphériques et à un couplage optique entre les fibres optiques périphériques adjacentes. Ces couplages dépendent du degré de fusion des gaines optiques, des dimensions périphériques et longitidunales de l'étranglement et des déformations géométriques correspondantes des gaines optiques des fibres intérieures. Une maîtrise de ces paramètres est délicate pour l'obtention d'un couplage optique souhaité entre les fibres. Aussi un contrôle en dynamique de l'énergie reçue sur la deuxième extrémité des fibres est utilisé pour détecter le couplage optique obtenu et arrêter le chauffage et l'étirage lorsque le couplage optique obtenu est celui souhaité.

La présente invention a pour but de réaliser un répartiteur optique multifibre permettant l'obtention d'un couplage optique défini et parfaitement reproductible d'un répartiteur à un autre, dont la fabrication est aisée et rapide et évite le contrôle en dynamique du couplage optique obtenu.

Elle a pour objet un procédé de fabrication d'un répartiteur optique multifibre, ledit répartiteur comportant des fibres optiques périphériques et une fibre optique centrale couplées optiquement et mécaniquement au moins localement, caractérisé en ce qu'il consiste à réaliser un conducteur optique cylindrique multiguide, comportant N guides périphériques et un guide central, tous cylindriques parallèles et solidarisés entre eux dans une gaine de couplage mécanique et optique, par étirage d'une préforme primaire correspondant audit conducteur, lesdits guides définissant lesdites fibres, respectivement, et présentant des caractéristiques opto-géométriques relativement entre eux dans ladite gaine de couplage pour leur couplage optique sur une longueur définie dudit conducteur, et en ce qu'il consiste en outre à sectionner un tronçon du dit conducteur, ledit tronçon ayant une longueur égale à un nombre entier impair de fois ladite longueur définie pour l'obtention dudit répartiteur.

En outre avantageusement,
- pour chaque guide comprenant un coeur et une gaine optique, l'écart d'indice de réfraction est compris entre 2.10⁻³ et 3.10^{-3;}
- chaque guide périphérique et le guide central présentent entre eux un entraxe de 30 à 40 microns;
- la préforme primaire est formée par assemblage d'une préforme élémentaire centrale dans un jonc alésé axialement et de N préformes élémentaires périphériques dans N cannelures périphériques du jonc et par recharge sous forme d'un revêtement cylindrique du jonc et des N préformes élémentaires en place dans les cannelures, lesdits guides étant déduits desdites préformes élémentaires et ladite gaine déduite dudit jonc et dudit revêtement par l'opération d'étirage.

La présente invention a également pour objet un répartiteur obtenu selon ce procédé, caractérisé en ce qu'il présente un diamètre extérieur sensiblement de 125 microns.

Avantageusement en outre :
- les guides périphériques sont sensiblement régulièrement répartis autour dudit guide central;
- les guides périphériques sont identiques entre eux et présentent un diamètre extérieur de gaine optique compris entre 20 et 30 microns et un diamètre de coeur compris entre 7 et 10 microns et ledit guide central présente un diamètre extérieur de gaine optique également compris entre 20 et 30 microns et un diamètre de coeur compris 7 et 12 microns;
- le répartiteur est équipé d'une fibre monocoeur dénudée de même diamètre que le répartiteur, alignée axialement et soudée à l'une des extrémités dudit répartiteur, et d'une amorce de sortie, constituée par une fibre multicoeur, présentant le même diamètre que ledit répartiteur et ayant N coeurs selon la même disposition géométrique que les N guides périphériques, alignée axialement et angulairement et soudée à l'autre extrémité dudit répartiteur.
- le répartiteur est équipé d'une amorce d'entrée, constituée par une fibre monocoeur dénudée de même diamètre que le répartiteur, alignée axialement et soudée à l'une des extrémités dite d'entrée dudit répartiteur, et d'amorces de sortie, constituées chacune par une fibre monocoeur dénudée de sortie soudée sur la périphérie dudit répartiteur et à une distance de ladite extrémité d'entrée égale à un nombre entier impair de fois ladite longueur définie, en étant au droit de l'un desdits guides périphériques et lui étant couplée optiquement par ondes évanescentes.

Les caractéristiques et avantages de l'invention ressortiront de la description faite ci-après d'un mode préféré de réalisation donné à titre d'exemple et illustré dans les dessins ci-annexés.

Dans ces dessins
- La figure 1 est une vue en perspective d'un répartiteur selon l'invention,
- La figure 2 est une vue montrée partiellement en coupe d'une préforme dite primaire, à partir de laquelle est obtenu le répartiteur,
- La figure 3 est une vue en élévation d'un conducteur optique multiguide obtenu à partir de la préforme primaire,
- La figure 4 représente schématiquement en coupe ledit répartiteur équipé d'une fibre amorce d'entrée et d'une fibre amorce de sortie, la première étant monocoeur et la deuxième multicoeur,
- La figure 5 représente schématiquement en coupe un mode de couplage du répartiteur précité à des fibres monocoeurs, l'une d'entrée et les autres de sortie.

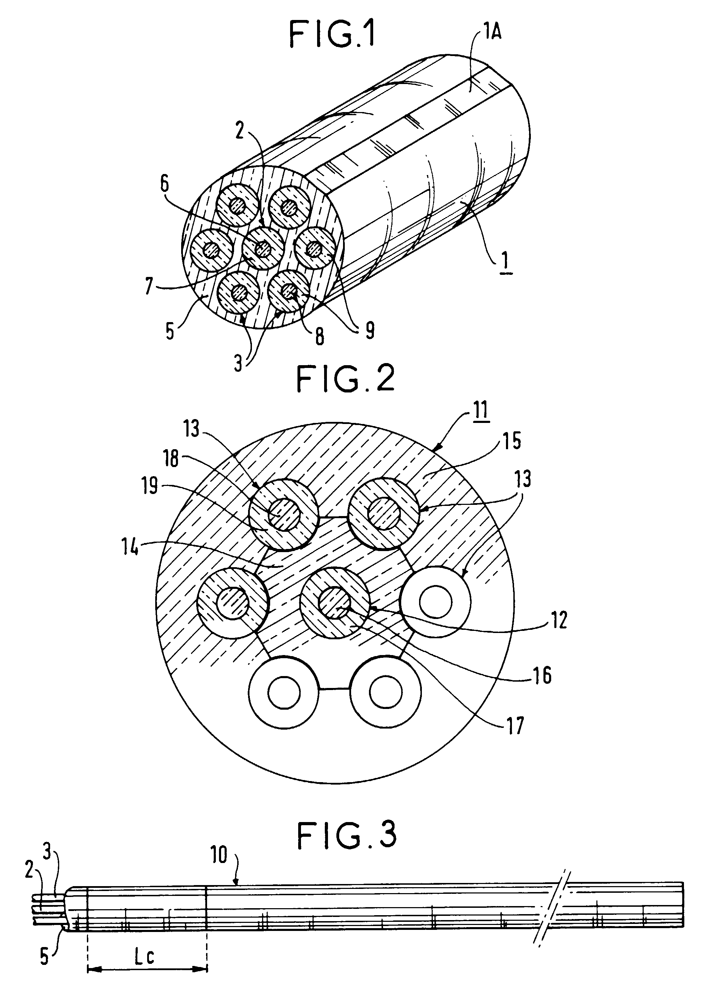

En se référant aux figures 1 à 3, on voit que le répartiteur optique 1 selon l'invention (figure 1) est un composant monolithique constitué par un tronçon, de longueur définie, d'un conducteur optique cylindrique multiguide 10 (figure 3), lui-même résultant d'une opération de fibrage d'une préforme primaire 11 (figure 2). La préforme primaire et le conducteur optique 10 se correspondent par homothétie.

Les éléments constitutifs du répartiteur optique et du conducteur optique sont identiques et sont désignés par les mêmes références, dans les figures 1 et 3. Ils correspondent à ceux de la préforme primaire 11.

Le répartiteur 1 et le conducteur 10 comportent un guide central 2 et N guides périphériques 3, tous cylindriques et noyés parallèlement les uns aux autres de manière non jointive dans une gaine cylindrique de couplage optique et mécanique 5.

Le guide central comporte un coeur 6 entouré d'une gaine optique 7. Chaque guide périphérique comporte pareillement un coeur 8 et une gaine optique 9. Ces guides 2 et 3 sont des fibres optiques élémentaires identiques ou sensiblement identiques, dont l'écart d'indice de réfraction entre le coeur et la gaine optique de chacune d'elles est compris entre 2.10⁻³ et 3.10⁻³ et est en particulier de 2,5.10³.

La gaine 5 qui assure le couplage optique et mécanique de ces fibres élémentaires est d'indice de réfraction aussi proche que possible de celui de la gaine optique de chacune d'elles.

Dans la réalisation illustrée, les guides périphériques 3 sont au nombre de six et sont régulièrement répartis autour du guide central. Ils sont aussi identiques que possible les uns aux autres et au guide central. L'entraxe entre les guides périphériques adjacents est identique à l'entraxe entre l'un d'eux et le guide central.

Ce répartiteur a de préférence un diamètre extérieur de 125 microns, donné par le diamètre de la gaine de couplage 5. Les guides ont un diamètre extérieur compris entre 20 et 30 microns, qui est donné par la gaine optique de chaque fibre élémentaire et est en particulier de 25 microns. L'entraxe entre les guides périphériques adjacents et entre chaque guide périphérique et le guide central est de l'ordre de 35 microns. Dans ces conditions toute l'énergie reçue dans le guide central, par l'une des extrémités du répartiteur, se répartit uniformément entre les sept guides après une longueur de propagation égale à la longueur de couplage Lc qui est de l'ordre de 20 mm, ou égale à un multiple impair de cette longueur de couplage Lc. La longueur du répartiteur est précisément égale à cette longueur de couplage Lc ou à un multiple impair de cette longueur de couplage.

Cette longueur de couplage est définie parfaitement en fonction de l'écart d'indice de réfraction entre le coeur et la gaine optique des guides ou entre chaque guide périphérique et le guide central ainsi que l'entraxe entre les guides périphériques adjacents.

Dès lors, on comprend qu'une série de répartiteurs, ayant des caractéristiques optiques identiques et prédéfinies et des dimensions géométriques elles-mêmes identiques, exclusion faite éventuellement de leur longueur, est aisée à réaliser à partir du même conducteur optique multifibre 10, de grande longueur. Ces répartiteurs sont des tronçons de longueur convenable de ce conducteur.

Le conducteur 10 résulte de l'opération de fibrage de la préforme primaire 11.

Cette préforme primaire 11 comporte une préforme élémentaire centrale 12 et N préformes élémentaires périphériques 13, qui correspondent aux guides 2 et 3. Ces préformes élémentaires sont montées sur un jonc 14, qui présente un alésage axial non référencé, recevant la préforme élémentaire centrale, et de cannelures périphériques droites et de section semi circulaire non référencées, recevant les préformes élémentaires périphériques. L'ensemble reçoit alors un revêtement périphérique 15. Le jonc 14 et le revêtement 15 sont en silice.

Le revêtement est réalisé par un procédé habituel de recharge, par exemple par plasma, et confère à l'ensemble la forme cylindrique et le diamètre de la préforme primaire résultante.

Ces préformes élémentaires ont chacune un coeur 16 ou 18 et une gaine optique 17 ou 19, selon la préforme élémentaire centrale ou celles périphériques considérées, qui correspondent au coeur et à la gaine optique de chaque guide du conducteur optique. Le jonc 14 correspond à la partie interne de la gaine 5 du conducteur et le revêtement 15 à la partie externe de cette même gaine 5. Leur indice de réfraction est aussi proche que possible de celui de la gaine optique de chaque fibre élémentaire ou de chaque préforme élémentaire.

En variante indiquée par rapport à la figure 2 et des figures 1 et 3, la préforme élémentaire centrale a un diamètre de coeur légèrement supérieur à celui du coeur des préformes élémentaires périphériques. Le diamètre de la gaine optique de la préforme élémentaire centrale reste sensiblement identique à celui de la gaine optique de chaque préforme élémentaire périphérique. Ainsi, le coeur 16 du guide central du conducteur ou du répartiteur est par exemple de 12 microns, alors que celui des guides périphériques est de 10 microns. Dans ces conditions, l'énergie injectée dans le guide central du répartiteur se répartit en quasi totalité dans ses guides périphériques.

Dans une autre variante, la répartition d'énergie entre les guides périphériques peut être inégale et répondre à une répartition prédéterminée par des spécifications d'un système de télécommunication couplé au répartiteur. Une telle répartition inégale et prédéterminée peut être obtenue par une disposition angulaire et/ou radiale variable des guides périphériques autour du guide central, ou une disposition angulaire uniforme mais un entraxe variable entre les guides périphériques et le guide central. Les positions angulaires ou radiales des guides périphériques autour du guide central donnent lieu à une gradation du couplage optique en particulier entre chaque guide périphérique et le guide central.

Dans le mode préféré de réalisation illustré, le répartiteur comporte six guides périphériques autour du guide central, pour une optimisation du nombre de guides dans le tronçon de conducteur de diamètre de 125 microns. En variante aussi, le répartiteur peut comporter un nombre de guides périphériques inférieur à 6.

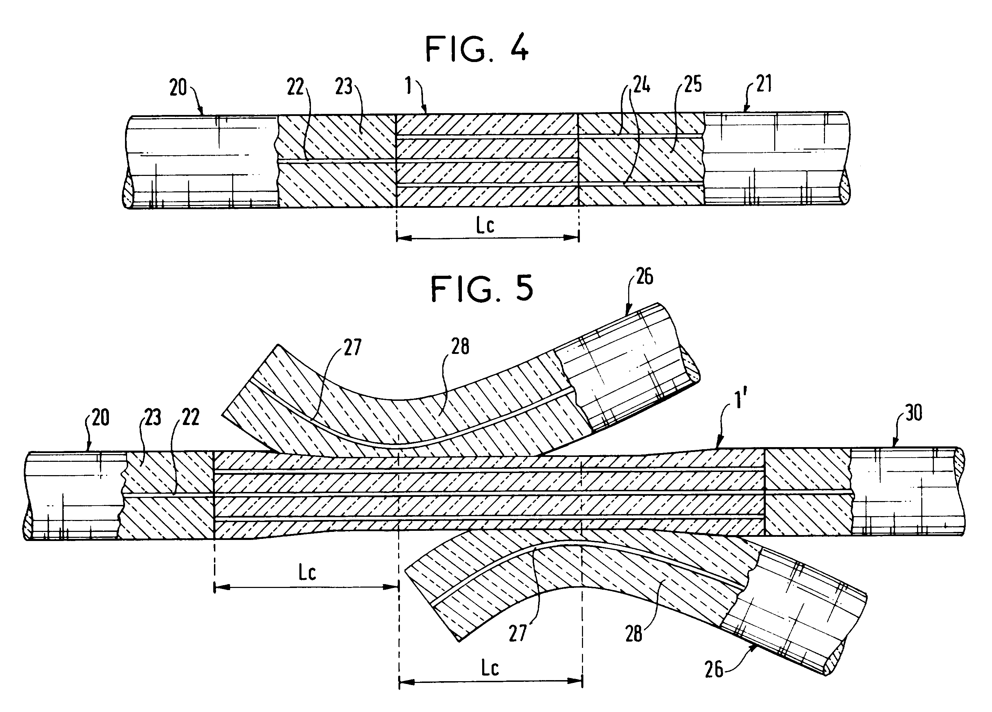

La figure 4 représente à titre d'exemple le répartiteur précité 1, équipé d'une fibre amorce d'entrée 20 et d'une fibre amorce de sortie 21.

La fibre amorce d'entrée 20 est une fibre monocoeur conventionnelle dénudée, ayant le même diamètre que le répartiteur et comportant un coeur 22 entouré d'une gaine optique 23. Elle est alignée axialement et soudée à l'une des extrémités du répartiteur. La fibre amorce de sortie 21 est une fibre multicoeur, présentant le même diamètre extérieur que le répartiteur 1 et comportant N coeurs ou fibres élémentaires 24 dans une gaine de couplage mécanique 25, les N coeurs ayant la même disposition géométrique que les N guides périphériques et étant en particulier au nombre de 6, N=6, pour le répartiteur 1 ayant six guides périphériques. La fibre multicoeur est soudée à l'autre extrémité du répartiteur, après avoir réalisé son alignement angulaire relativement au répartiteur pour l'alignement optique des N coeurs avec les N guides périphériques, respectivement.

Un marquage longitudinal sur la périphérie de répartiteur 1, tel qu'un méplat 1A (figure 1), résultant du marquage correspondant non représenté réalisé sur le conducteur et/ou sur la préforme primaire, et un marquage correspondant non représenté prévu sur la fibre multicoeur permettent de faciliter leur positionnement angulaire relatif.

La figure 5 illustre un mode de couplage des guides périphériques du répartiteur noté 1' à des fibres monocoeurs de sortie 26 et à la fibre amorce d'entrée précitée 20. Les fibres 26 ont chacune un coeur 27 entouré d'une gaine optique 28.

Pour N=6 selon l'exemple illustré, ces fibres 26 sont réparties en deux niveaux ou jeux sur la périphérie du répartiteur, chaque jeu étant formé avanvatageusement de trois fibres monocoeurs, dont l'une seule est visible. Le premier niveau de couplage entre trois fibres monocoeurs 26 et trois guides non adjacents du répartiteur est réalisé à une distance de l'extrémité d'entrée du répartiteur égale à la longueur précitée de couplage Lc, ou à un multiple impair de cette longueur. Le deuxième niveau est distant du premier de cette longueur Lc ou d'un multiple impair de celle-ci. La longueur du répartiteur est alors choisie en conséquence pour ces deux niveaux de couplage.

Le couplage de chaque fibre monocoeur de sortie 26 à l'un des guides périphériques 3 du répartiteur est assuré par usinage préalable de la fibre monocoeur de sortie et du répartiteur, pour réduire l'épaisseur de gaine entre le coeur de cette fibre et celui de ce guide, et par soudage de cette fibre monocoeur au droit de ce guide sur la périphérie du répartiteur . Ce couplage obtenu est un couplage optique par ondes évanescentes entre les deux coeurs de la fibre 26 et du guide 3, donnant lieu au transfert dans la fibre de sortie 26 de l'énergie se propageant dans le guide 3, pour une longueur de couplage inférieure à 10 mm lorsque la distance entre les deux coeurs concernés est de l'ordre de 10 à 20 microns.

On note qu'une fibre monocoeur de sortie supplémentaire 30 est soudée en bout du répartiteur. Cette fibre 30 est ainsi couplée au guide central 2 du répartiteur.

Bien entendu ce mode de couplage du répartiteur à des fibres monocoeurs de sortie peut être différent, en étant en tant que tel analogue au couplage par ondes évanescentes d'une fibre multicoeur à des fibres monocoeurs.

## Revendications

1. Procédé de fabrication d'un répartiteur optique multifibre, ledit répartiteur comportant des fibres optiques périphériques et une fibre optique centrale couplées optiquement et mécaniquement au moins localement, caractérisé en ce qu'il consiste à réaliser un conducteur optique cylindrique multiguide (10), comportant N guides périphériques (3) et un guide central (1), tous cylindriques parallèles et solidarisés entre eux dans une gaine de couplage mécanique et optique (5), par étirage d'une préforme primaire correspondant audit conducteur, lesdits guides définissant lesdites fibres, respectivement, et présentant des caractéristiques opto-géométriques relativement entre eux dans ladite gaine de couplage pour leur couplage optique sur une longueur définie dudit conducteur, et en ce qu'il consiste en outre à sectionner un tronçon du dit conducteur, ledit tronçon ayant une longueur égale à un nombre entier impair de fois ladite longueur définie pour l'obtention dudit répartiteur.

2. Procédé selon la revendication 1, caractérisé en ce qu'il consiste à choisir pour chaque guide, comprenant comme chaque fibre un coeur et une gaine optique, un écart d'indice de réfraction compris entre 2.10⁻³ et 3.10⁻³ entre ledit coeur et la gaine optique et à choisir pour ladite gaine de couplage un indice de réfraction sensiblement égal à celui de ladite gaine optique.

3. Procédé selon la revendication 2, caractérisé en ce qu'il consiste à solidariser lesdits guides dans ladite gaine de couplage, en obtenant un entraxe entre chaque guide périphérique et le guide central compris entre 30 et 40 microns.

4. Procédé selon l'une des revendications 2 et 3, caractérisé en ce qu'il consiste à réaliser ladite préforme primaire par assemblage d'une préforme élémentaire centrale et de N préformes élémentaires sur un jonc, alésé axialement pour recevoir ladite préforme primaire centrale et muni de N cannelures droites sur sa périphérie pour recevoir les N préformes élémentaires périphériques, lesdites préformes élémentaires et lesdits guides se correspondant par une homothétie donnée, et par recharge dudit jonc et des N préformes élémentaires périphériques pour l'obtention d'un revêtement périphérique cylindrique, ledit jonc et ledit revêtement correspondant à ladite gaine de couplage par la même homothétie.

5. Procédé selon l'une des revendications 2 à 4, caractérisé en ce qu'il consiste à définir des positions angulaires et radiales des guides périphériques adjacents relativement audit guide central selon une loi de couplage prédéterminée entre le guide central et chaque guide périphérique et entre les guides périphériques adjacents.

6. Répartiteur obtenu par le procédé selon l'une des revendications 2 à 5, caractérisé en ce qu'il présente un diamètre extérieur sensiblement de 125 microns.

7. Répartiteur selon la revendication 6, caractérisé en ce que lesdits guides périphériques (3) sont sensiblement régulièrement répartis autour dudit guide central (2).

8. Répartiteur selon l'une des revendications 6 et 7, caractérisé en ce que lesdits guides périphériques (3) sont identiques entre eux et présentent un diamètre extérieur de gaine optique (9) compris entre 20 et 30 microns et un diamètre de coeur (8) compris entre 7 et 10 microns et en ce que ledit guide central (2) présente un diamètre extérieur de gaine optique (7) également compris entre 20 et 30 microns et un diamètre de coeur (6) compris 7 et 12 microns.

9. Répartiteur selon l'une des revendications 7 et 8, caractérisé en ce qu'il est en outre équipé d'une amorce d'entrée (20), constituée par une fibre monocoeur dénudée de même diamètre que le répartiteur, alignée axialement et soudée à l'une des extrémités dudit répartiteur, et d'une amorce de sortie (21), constituée par une fibre multicoeur, présentant le même diamètre que ledit répartiteur et ayant N coeurs selon la même disposition géométrique que les N guides périphériques, alignée axialement et angulairement et soudée à l'autre extrémité dudit répartiteur.

10. Répartiteur selon l'une des revendications 7 et 8, caractérisé en ce qu'il est en outre équipé d'une amorce d'entrée (20), constituée par une fibre monocoeur dénudée d'entrée de même diamètre que ledit répartiteur, alignée axialement et soudée à l'une des extrémités dite d'entrée dudit répartiteur, et d'amorce de sortie (26), constituées chacune par une fibre monocoeur dénudée de sortie soudée sur la périphérie dudit répartiteur et à une distance de ladite extrémité d'entrée égale à un nombre entier impair de fois ladite longueur définie, en étant au droit de l'un desdits guides périphériques (3) et lui étant couplée optiquement par ondes évanescentes.

11. Répartiteur selon la revendication 1, caractérisé en ce qu'il comporte N fibres monocoeurs de sortie, couplées par jeu d'au moins deux d'entre elles en des niveaux de couplage décalés le long du répartiteur.

12. Répartiteur selon l'une des revendications 10 et 11 caractérisé en ce qu'il est en outre équipé d'une fibre supplémentaire monocoeur de sortie (30) de même diamètre que le répartiteur, alignée axialement et soudée à l'autre extrémité dudit répartiteur.
